Europäisches Patentamt

European Patent Office

Office européen des brevets

(11) Numéro de publication : **0 440 545 A1**

# (12) DEMANDE DE BREVET EUROPEEN

(21) Numéro de dépôt : **91400196.1**

(22) Date de dépôt : **29.01.91**

(51) Int. Cl.⁵ : **G06F 1/00**

(30) Priorité : **30.01.90 FR 9001061**

(43) Date de publication de la demande :
**07.08.91 Bulletin 91/32**

(84) Etats contractants désignés :
**AT BE CH DE DK ES FR GB GR IT LI LU NL SE**

(71) Demandeur : **MICROPHAR Société anonyme dite**
**122, avenue Charles de Gaulle**
**F-92522 Neuilly Cédex (FR)**

(72) Inventeur : **Parent, Jacques**
**31, rue Edouard Nortier**
**F-92200 Neuilly-sur-Seine (FR)**

(74) Mandataire : **Pinguet, André**
**Cabinet de Propriété Industrielle CAPRI 28**
**bis, avenue Mozart**
**F-75016 Paris (FR)**

(54) **Dispositif matériel identifiable par un logiciel utilisant des moyens, standard ou non, de communication.**

(57)    Le dispositif comporte un microcontrôleur MP organisé pour recevoir des signaux émis par un ordinateur et pour lui renvoyer une réponse. Le dispositif est alimenté exclusivement par l'énergie des signaux reçus. A cette fin, il comporte un circuit d'alimentation approprié. La tension de fonctionnement du microcontrôleur étant plus faible, des circuits sont prévus pour abaisser la tension du signal entrant et relever celle du signal repartant.

Fig 1

EP 0 440 545 A1

# DISPOSITIF MATERIEL IDENTIFIABLE PAR UN LOGICIEL UTILISANT DES MOYENS, STANDARD OU NON, DE COMMUNICATION

L'invention a pour objet un dispositif matériel miniaturisé identifiable par un logiciel utilisant des moyens, standard ou non, de communication sur un calculateur, notamment du genre désigné communément clé ou dongle. Une telle clé est normalement connectée à une prise d'entrée/sortie d'un ordinateur (calculateur) et a pour objet de protéger contre la copie un logiciel en autorisant seulement le fonctionnement de la machine avec ce logiciel quand la clé associée à ce logiciel est connectée à l'ordinateur. Il existe déjà différents types de clés qui permettent un certain degré de protection. Mais il est apparu utile de réaliser une nouvelle clé permettant une protection accrue pour s'opposer aux tentatives de piratage.

La présente invention a pour objet un dispositif de contrôle de l'utilisation d'un logiciel sur un calculateur, ledit dispositif étant organisé pour être branché sur une entrée-sortie dudit calculateur pour recevoir des signaux d'interrogation et renvoyer audit calculateur des signaux de réponse, dont l'examen par le calculateur permet de contrôler la présence dudit dispositif, caractérisé en ce que ledit dispositif comporte un microcontrôleur à faible consommation, et est alimenté en énergie électrique uniquement par les signaux reçus du calculateur. Le microcontrôleur permet un traitement élaboré des signaux reçus du calculateur pour générer des signaux de réponse : grâce à la complexité de ce traitement, les piratages sont quasiment impossibles.

Il est connu d'après le document FR-2 622 319 d'utiliser un microcontrôleur dans un dispositif de protection de logiciels, connectable à un port d'entrée/sortie d'un ordinateur. Il est d'autre part connu d'après le document EP-0 314 530, émanant du demandeur, d'alimenter une clé de protection, ne comportant pas de microcontrôleur, par des signaux provenant du port d'entrée/sortie de l'ordinateur.

Mais la tension des signaux provenant des ports d'entrée/sortie du calculateur, notamment les ports série, est supérieure à celle du microcontrôleur. Selon l'invention, la clé comporte un circuit abaisseur de tension pour adapter les signaux reçus du calculateur à la tension du microcontrôleur, un circuit élévateur de tension pour adapter les signaux de réponse émis par le microcontrôleur à la tension du calculateur, et un circuit d'alimentation recevant les signaux d'interrogation émis par le calculateur, pour accumuler sous forme utilisable l'énergie reçue du calculateur dans les signaux d'interrogation, avec une alimentation à la tension du microcontrôleur et une alimentation pour le circuit élévateur. Avantageusement, une ligne en retour du périphérique est connectée à la borne de sortie du microcontrôleur, par l'intermédiaire d'une résistance, de façon que, quand le microcontrôleur émet un signal de réponse, un signal provenant du périphérique ne perturbe pas la sortie du microcontrôleur. La ligne en retour du périphérique peut être connectée à une entrée du microcontrôleur, par l'intermédiaire d'une résistance pour faire chuter la tension à celle du microcontrôleur de façon à y faire entrer l'information d'un signal avertissant d'une émission. Le microcontrôleur peut envoyer un message au périphérique si un signal provenant du périphérique a été détecté par ladite entrée du microcontrôleur pendant qu'un message était émis vers le calculateur par la borne de sortie du microcontrôleur.

Dans une variante de l'invention, tous les signaux de données émis par le calculateur transitent par le microcontrôleur, et le dispositif comporte :

    – un moyen pour orienter séléctivement les signaux émis par le microcontrôleur vers le calculateur ou vers le périphérique, et

    – un second circuit élévateur de tension alimenté par le circuit d'alimentation, pour adapter à la tension du périphérique les signaux émis par le microcontrôleur vers ledit périphérique.

Dans une autre variante de l'invention, tous les signaux de données émis par le calculateur transitent par le microcontrôleur, le microcontrôleur reçoit les signaux en retour du périphérique par l'intermédiaire d'un second circuit abaisseur de tension, et ledit dispositif comporte un second circuit élévateur de tension alimenté par le circuit d'alimentation, pour adapter à la tension du périphérique les signaux émis par ledit microcontrôleur vers le périphérique.

Selon l'invention, le microcontrôleur comporte des moyens pour stocker une première série de caractères, des moyens pour comparer, suivant des critères déterminés, à ladite première série une seconde série, en moindre nombre, de caractères, contenue dans ledit signal d'interrogation, et des moyens pour émettre un signal de réponse en fonction du résultat de ladite comparaison, ledit signal de réponse étant constitué par une troisième série de caractères en même nombre que dans ladite seconde série, et de façon qu'une même seconde série donnée de caractères reçoive toujours la même réponse.

Avantageusement, les moyens pour comparer la deuxième série de caractères à la première série de caractères sont organisés pour rechercher dans la deuxième série la première séquence commune la plus longue, et pour repérer la position de ladite première séquence la plus longue dans ladite seconde série, les éléments caractéristiques du signal de réponse étant ladite première séquence la plus longue et ladite position de cette séquence.

Il est avantageux de coder les éléments caractéristiques de la réponse selon une loi de codage choisie. Ladite loi de codage choisie peut être une table
de correspondance contenue dans le programme et
dans la mémoire interne de la clé. Avantageusement,
ladite table de correspondance est modifiée au cours
des échanges de signaux d'interrogation et de
réponse entre le calculateur et la clé, par une permutation circulaire déterminée par une valeur entière
aléatoire transmise dans un signal d'interrogation ou
de réponse précédemment échangé entre le calculateur et la clé.

Le dispositif de l'invention peut être réalisé transparent et constituer un périphérique standard, fonctionnant selon le protocole V24 (RS 232), et est
indépendant des unités centrales disposant d'un tel
port reconnu par le système d'exploitation. La clé
selon l'invention fonctionne sur tout type de ces
machines.

D'autres caractéristiques et avantages de l'invention apparaîtront au cours de la description qui va suivre, donnée à titre d'exemple non limitatif, en regard
des dessins joints, et qui fera bien comprendre
comment l'invention peut être réalisée.

Sur les dessins,
– la figure 1 est un schéma d'une forme de réalisation simplifiée du dispositif selon l'invention,
– la figure 2 est un schéma d'un dispositif transparent, pouvant être placé entre un ordinateur et
un périphérique,
– la figure 3 est un schéma plus détaillé des circuits du dispositif selon l'invention,
– la figure 4 est un schéma d'une variante de clé
transparente, et
– la figure 5 est un schéma d'une autre variante
de clé transparente.

Comme on sait, le dispositif de l'invention, ou clé,
est normalement connecté à une prise de sortie d'un
ordinateur (calculateur) et a pour objet de protéger
contre la copie un logiciel ou un programme en autorisant seulement le fonctionnement de la machine
avec ce programme quand la clé associée à ce programme est connectée à la machine, ou plus généralement, a pour objet d'être rigoureusement identifiée
pour autoriser ou non un processus particulier .

Selon une caractéristique importante de la présente invention, la clé se connecte sur un port d'ordinateur standard (protocole V24 (RS 232)), et
éventuellement sur des ports non standards.

Selon une possibilité, dans la pratique, la clé est
souvent intercalée sur une liaison entre l'ordinateur et
un périphérique. Cette liaison comportant plusieurs
lignes, il est possible de réserver certaines lignes
exclusives à la clé. Elle peut aussi être transparente,
c'est-à-dire que les lignes qui lui sont nécessaires la
traversent et véhiculent l'information dans les deux
sens entre l'ordinateur et le périphérique, comme si la
clé n'était pas intercalée entre l'ordinateur et le périphérique.

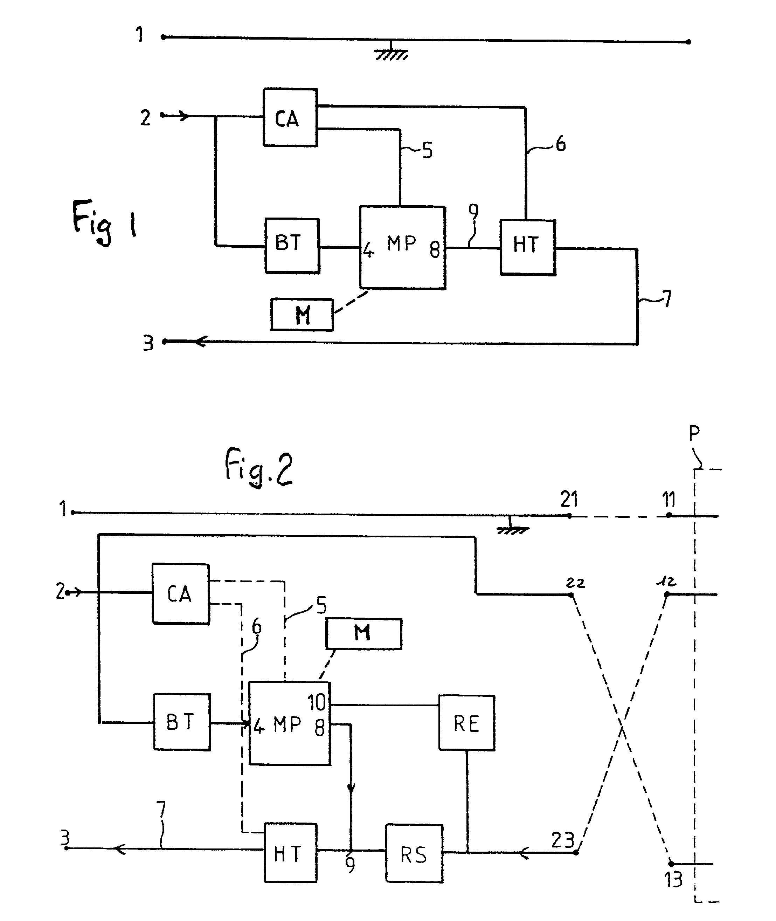

La figure 1 représente le schéma d'une clé simple, non transparente. Elle possède différentes bornes, notamment une terre 1, une entrée 2 et une sortie
3.

Sur la borne 2, généralement dénommée TD, la
clé reçoit des signaux d'interrogations émis par l'ordinateur pendant le déroulement du programme. Sur la
borne de sortie 3, généralement dénommée RD, la clé
renvoie des signaux de réponse à l'ordinateur. Une
caractéristique importante de la présente invention
est l'emploi sur la clé d'un microcontrôleur MP. Les
microcontrôleurs que l'on fabrique actuellement
consomment très peu d'énergie, et selon la présente
invention on utilise un microcontrôleur qui, en l'occurence, est uniquement alimenté par l'énergie contenue dans les signaux émis par l'ordinateur. Il n'y a
donc pas de ligne réservée à l'alimentation entre
l'ordinateur et la clé. Un tel microcontrôleur fonctionne
généralement sous une tension inférieure à celle des
ports d'entrée/sortie de l'ordinateur, notamment les
ports série. En général, les signaux de l'ordinateur
sont des signaux en créneaux émis sous une tension
de +12 / -12 V, alors que le microcontrôleur fonctionne
sous une tension de 3 à 5 V en valeur absolue, -5 V
par exemple. Dans ce cas, les signaux entrants et sortants du microcontrôleur MP sont des signaux en créneaux à une tension de 0 / -5 V. L'invention fournit des
moyens pour assurer un fonctionnement correct dans
ces conditions.

L'entrée 2 est connectée à une entrée 4 du microcontrôleur à travers un circuit abaisseur de tension
BT, qui peut être constitué par une résistance. Cette
résistance BT collabore avec l'entrée 4 du microcontrôleur MP, qui comporte deux diodes Zener de polarités opposées, internes au microcontrôleur MP.
Suivant la polarité du signal provenant de l'entrée 2,
ces diodes Zener imposent une tension de O V ou de
-5 V à l'entrée 4 : O V pour un signal de +12 V à
l'entrée 2, et -5 V pour un signal de -12 V à l'entrée 2.
La résistance BT subit donc une différence de potentiel imposée par la tension du signal entrant en 2 et la
tension en 4, et est donc parcourue par un courant
suffisant pour créer une chute de tension égale à cette
différence de potentiel. L'entrée 2 est également
connectée à un circuit d'alimentation CA. La grande
impédance d'entrée du microcontrôleur limite à une
valeur très faible l'intensité du courant entrant, et par
suite la majeure partie de l'énergie entre dans le circuit d'alimentation. Le circuit CA stocke et transforme
cette énergie de façon appropriée, et alimente d'une
part le microcontrôleur par une ligne 5 à la tension
qu'il lui faut (- 5 V), et par une ligne 6, un circuit élévateur de tension HT (ici à une tension de -12V).

Le microcontrôleur comporte une sortie 8,
connectée au circuit élévateur HT par une ligne 9. En
fonction des signaux reçus du calculateur par sa
borne d'entrée 4, il peut émettre un signal de réponse
sur sa sortie 8, à une tension de 0/-5V : la fonction du circuit HT est de transformer ce signal en un signal -12 / +12V, qui est émis par ledit circuit HT vers l'ordinateur par une ligne 7 reliée à la borne 3.

L'emploi d'un microcontrôleur dans ces conditions permet, sans avoir à recevoir d'énergie autre que celle fournie par les signaux provenant de l'ordinateur, sans pile, sans batterie, d'assurer une protection très efficace en rendant impossible toute analyse des codes de protection.

Le microcontrôleur MP comporte une mémoire morte et une mémoire vive internes. De plus, il peut éventuellement être connecté à une mémoire M rémanente de type EEPROM, externe. On pourrait aussi concevoir que la mémoire M soit interne au microcontrôleur MP.

Dans un mode de mise en oeuvre avantageux de la présente invention, la mémoire interne du microcontrôleur est chargée d'une première série de caractères (par exemple 512 caractères), qui est également incorporée dans le programme, qui la charge dans l'ordinateur. A différents instants du déroulement du programme, l'ordinateur adresse à la clé, sur la borne 2, une seconde série, moins longue, de caractères, par exemple comportant une suite de 16 caractères d'identification, dite balise de reconnaissance, et 64 caractères aléatoires. Le microcontrôleur, après avoir reconnu les 16 premiers caractères, effectue une comparaison suivant des critères déterminés entre la seconde série de caractères et la première série, et émet sur sa sortie 8, c'est-à-dire sur la borne 3, un signal de conclusion de cette comparaison. L'ordinateur, de son côté, effectue la même comparaison, avec les mêmes critères. Si les résultats des deux comparaisons sont concordants, le programme du calculateur est donc assuré de la présence de la clé.

Un critère de l'opération de comparaison peut être la recherche, dans la seconde série de caractères, de la première séquence de caractères commune la plus longue entre les deux séries de caractères (au cas où il y aurait plusieurs séquences communes de même longueur, seule la première séquence dans ladite seconde série est prise en compte). Cette information est renvoyée à l'ordinateur qui, ayant fait la même opération, doit trouver le même résultat. Avantageusement, l'information en retour se présente sous la forme d'une troisième série de caractères, comportant par exemple 80 caractères : une balise de reconnaissance de 16 caractères et 64 autres caractères qui peuvent comporter la séquence commune et la position qu'elle occupe dans ladite deuxième série de caractères. On comprendra que pour éviter de rendre le déchiffrement facile, la répétition d'une même interrogation devra provoquer la même réponse dans sa totalité.

Afin de rendre plus difficile encore la reconnaissance de la première série de caractères, il est possible de coder la réponse. Le microcontrôleur pourra ainsi par exemple comporter en mémoire une table de correspondance de 64 entiers inférieurs ou égaux à 64. La position N dans la seconde série du premier caractère de la première séquence commune fournira par la correspondance dans cette table un entier Q compris entre 1 et 64, qui définira une nouvelle position dans la troisième série envoyée en réponse par la clé à l'ordinateur. La table de correspondance qui est une fonction (application) Q de N (Q = f(N)), peut comporter les 64 premiers entiers dans un ordre différent, ou certains peuvent être absents et d'autres répétés. Une autre possibilité de codage peut consister à renvoyer, au lieu de ladite première séquence commune, une séquence de même longueur située à un autre endroit par rapport à la première, par exemple une séquence consécutive dans la première série. D'autres codages sont possibles ; on peut utiliser d'autres fonctions Q = f(N). Dans cet exemple, la clé, en fait le microcontrôleur, garde en mémoire permanente la balise de reconnaissance, le protocole de transmission V24 (RS 232), une table de 64 entiers compris entre 1 et 64 et 512 caractères.

Dans le cas où une mémoire rémanente M est adjointe au microcontrôleur MP, le processus peut comporter les étapes d'écrire ou de lire dans ladite mémoire M, et plusieurs couples de questions / réponses peuvent être échangés entre l'ordinateur et la clé.

Avantageusement, chaque message échangé entre la clé et l'ordinateur peut être codé en fonction du message précédent. Par exemple, les caractères de chaque message peuvent être permutés entre eux en fonction d'une table de correspondance contenue dans le programme et dans la mémoire de la clé, et chaque message peut comporter, à un emplacement déterminé et constant, une valeur entière aléatoire calculée soit par le calculateur soit par la clé, déterminant une certaine permutation circulaire de la table de correspondance. Ainsi, le codage des questions et réponses échangées entre la clé et l'ordinateur varie au cours du temps.

La figure 2 représente le schéma d'une clé transparente, fonctionnant par ailleurs comme celle de la figure 1. Les éléments communs avec la clé simplifiée de la figure 1 sont désignés par les mêmes références. On a figuré un périphérique P, qui peut être une imprimante ou un autre appareil. Le périphérique P comporte un port de communication doté notamment d'une borne de terre 11, d'une borne d'émission de données 12, dite TD, et d'une borne de réception de données 13, dite RD.

La clé selon l'invention, tout en restant connectée au port de communication de l'ordinateur, peut se connecter à un port de communication du périphérique P, généralement par l'intermédiaire d'un câble. Un tel port de communication comporte au moins une borne de terre 11, une borne de réception de données 13, et une borne d'émission de données 12. Ainsi, la clé comporte une borne de terre 21 reliée à la borne de terre 1 et connectée à la borne 11 du périphérique P. A l'intérieur de la clé, les bornes 1 et 21 sont reliées l'une à l'autre par une ligne de terre reliée à la masse.

La borne d'entrée 2 de la clé, qui reçoit les signaux émis par l'ordinateur, est reliée directement à une borne de sortie 22 de la clé, connectée à la borne 13 de réception de données du périphérique. Ainsi, le périphérique P reçoit directement tous les messages provenant de l'ordinateur. Si un message provenant de l'ordinateur commence par la suite de caractères appelée balise de clé, la clé accepte le message, le traite et envoie un message en retour, comme expliqué en regard de la figure 1. Sinon, la clé ne réagit pas.

La borne 12 d'émission de données du périphérique P est connectée à une borne 23 de la clé. La borne 23 est connectée à la ligne 9 de sortie du microcontrôleur MP, entre ledit microcontrôleur MP et le circuit élévateur de tension ou d'adaptation électronique HT, par l'intermédiaire d'une résistance en série RS.

Lorsque le microcontrôleur MP n'émet pas de message par sa sortie 8, celle-ci est dans un état de haute impédance, de sorte que tout se passe comme si le microcontrôleur MP n'existait pas : le signal provenant du périphérique P par la borne 23, généralement en -12 / +12 V, est affaibli par la résistance RS, puis amplifié par le circuit élévateur de tension HT qui envoie sur la borne 3 un signal -12 / +12 V identique au signal émis par le périphérique P.

Lorsque le microcontrôleur MP émet un message par sa sortie 8, celle-ci est dans un état de basse impédance, et émet un signal de sortie 0 / -5V. La tension du signal émis est imposée soit à 0, soit à -5 V, par exemple par des diodes Zener de polarités opposées internes au microcontrôleur MP. Si un signal -12 / +12 V est émis simultanément par le périphérique sur la borne 23, la résistance RS est parcourue par un courant qui crée une chute de tension égale à la différence de tension ou de potentiel entre la ligne 9 et la borne 23, évitant ainsi un court-circuit entre la ligne 9 et la borne 23, et permettant à la ligne 9 de rester à la tension imposée par le signal en sortie du microcontrôleur MP. Lorsque le microcontrôleur MP émet un message en même temps que le périphérique P, c'est donc le message du microcontrôleur qui est reçu par le circuit élévateur de tension HT qui le transforme en un signal -12 / +12 V et le transmet à l'ordinateur par l'intermédiaire de la borne 3.

Pour éviter de perdre une information, la borne 23 est également connectée à une entrée 10 du microcontrôleur MP, à travers une résistance RE pour adapter la tension d'un signal émis en 12 par le périphérique (+12 / -12 V) à la tension des signaux du microcontrôleur (0 / -5 V). Cette adaptation se fait exactement de la même façon qu'à l'entrée 4 du microcontrôleur MP, et la résistance RE joue le même rôle que la résistance BT.

Si le périphérique émet un signal pendant que le microcontrôleur envoie une réponse par la ligne 9, le signal du périphérique ne sera pas reçu par l'ordinateur mais sera reçu par le microcontrôleur. A la fin de l'envoi de la réponse, le microcontrôleur émettra un signal vers l'ordinateur pour l'informer que le périphérique a envoyé un message qui a été bloqué, et l'ordinateur pourra alors à nouveau interroger la périphérique pour obtenir éventuellement l'information perdue.

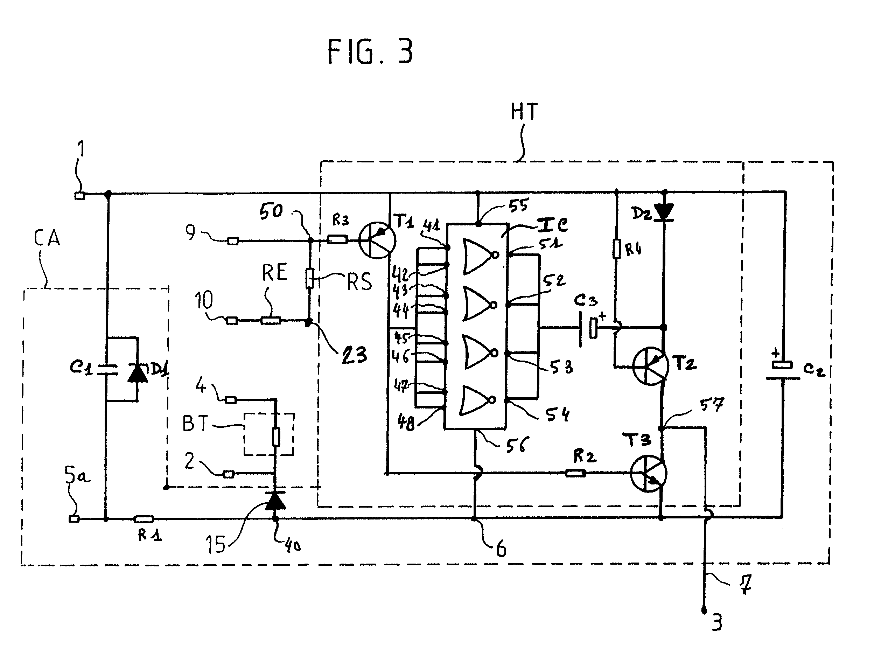

Sur la figure 3, on a représenté un schéma possible de réalisation pratique de la clé de la figure 2, le microcontrôleur MP et son éventuelle mémoire M n'étant pas représentés. Ce schéma représente les circuits CA, BT, HT dans des cadres en traits interrompus. La borne de terre porte le repère 1.

La borne 2 est connectée à l'entrée 4 du microcontrôleur MP par l'intermédiaire de la résistance BT déjà mentionnée.

Le circuit CA comporte une diode 15 connectée entre la borne 2 et un point 40 du circuit CA. La borne 2 recevant des signaux -12 / +12 V, la diode 15 est polarisée de façon à ne laisser passer que les signaux de tension négative provenant de la borne 2, soit -12 V. En outre, un condensateur C2 est connecté entre le point 40 et la borne de terre 1, de façon à stocker l'énergie provenant des signaux discontinus en -12 V provenant de la diode 15 : ainsi, le potentiel électrique au point 40 est exactement égal à -12 V lorsque la diode 15 est passante, et reste voisin de -12 V lorsque la diode ne laisse plus passer de signal à -12 V, la tension étant alors fournie par le condensateur C2. Le point 40 est relié par l'intermédiaire d'une résistance R1 à une borne 5a, reliée à la ligne 5 d'alimentation du microcontrôleur MP. Entre la borne 5a et la borne de terre est connectée une diode Zener D1 ayant une tension de seuil de 5 V, polarisée de façon que la tension de la borne 5a soit de -5 V. La diode Zener D1 impose donc une tension de -5 V à la borne 5a, de sorte que la résistance R1 est parcourue par un courant qui crée une chute de tension égale à la différence de potentiel entre le point 40 (-12 V) et la borne 5a (-5 V). Un condensateur C1 de filtrage ou de découplage d'alimentation est connecté en parallèle avec la diode Zener D1. Ainsi, le circuit d'alimentation CA fournit à partir des signaux intermittents -12 / +12 V provenant de l'ordinateur une tension constante à -5 V à la borne 5a, pour alimenter le microcontrôleur MP par la ligne 5, et une tension constante à -12 V au point 40, pour alimenter le circuit HT par la ligne 6.

Le circuit HT comporte un point d'entrée 50 connecté par la ligne 9 à la sortie 8 du microcontrôleur MP. Le point 50 est par ailleurs connecté à la borne 23 de réception des signaux provenant du périphérique P, par l'intermédiaire de la résistance RS déjà décrite. La résistance RS doit avoir une valeur suffisante pour protéger la sortie 8 du microcontrôleur MP, comme il a été vu précédemment, mais ne doit pas être trop forte pour ne pas trop affaiblir les signaux provenant du périphérique P lorsque le microcontrôleur MP n'émet pas de signal par sa sortie 8. Dans un exemple particulier de réalisation de l'invention, on a pu constater qu'une valeur de l'ordre de 10 KΩ était convenable.

Le point d'entrée 50 du circuit HT est relié par l'intermédiaire d'une résistance de protection R3 à la base d'un transistor T1 de commande de type PNP. L'émetteur du transistor T1 est connecté à la borne de terre 1, tandis que son collecteur est connecté par l'intermédiaire d'une résistance R2 à la base d'un transistor T3 de type NPN, dont l'émetteur est relié au point 40 du circuit d'alimentation CA.

Le circuit HT comporte en outre un circuit intégré IC à quatre portes NON-OU (NOR), doté de huit entrées 41, 42, 43, 44, 45, 46, 47, 48, de quatre sorties 51, 52, 53, 54, d'une borne de terre 55 et d'une borne d'alimentation 56. La borne de terre 55 est connectée à la borne de terre 1 de la clé, tandis que la borne d'alimentation 56 est connectée par la ligne 6 au point 40 du circuit d'alimentation CA, délivrant une tension de -12 V. Les huit entrées 41 à 48 du circuit IC sont connectées au collecteur du transistor de commande T1, et les quatre sorties 51 à 54 du circuit IC sont connectées ensemble à un condensateur C3. Le circuit IC se comporte donc comme un inverseur, produisant une sortie de 0 V lorsque ses entrées sont à -12 V et une sortie de -12 V lorsque ses entrées sont à 0 V. Dans cet exemple particulier, quatre portes NON-OU ont été utilisées de façon à obtenir un courant suffisant en sortie du circuit IC, mais un nombre différent de portes NON-OU pourrait être utilisé sans sortir du cadre de la présente invention.

Le circuit HT comporte en outre un transistor T2 de type PNP, dont le collecteur est connecté au collecteur du transistor T3 et dont l'émetteur est connecté à la borne de terre 1 par l'intermédiaire d'une diode D2 polarisée de façon à présenter un sens passant de la borne de terre 1 vers l'émetteur du transistor T2. Le condensateur C3 déjà mentionné est connecté entre l'émetteur du transistor T2 et les sorties 51, 52, 53, 54 du circuit IC. La base du transistor T2 est en outre connectée par l'intermédiaire d'une résistance R4 à la borne de terre 1. Enfin, un point 57 entre le collecteur du transistor T2 et le collecteur du transistor T3 est relié par la ligne 7 à la borne 3 de la clé.

Le circuit HT fonctionne de la façon suivante :

1.- lorsqu'une tension négative est appliquée au point d'entrée 50, par un signal provenant du microcontrôleur MP ou du périphérique P, le transistor T1 devient passant, de sorte que son collecteur est sensiblement au potentiel 0 V. Le transistor T3, dont l'émetteur est au potentiel -12 V, devient alors passant à son tour, de sorte que la tension au point 57 ou à la borne 3 est de -12 V.

Par ailleurs, les entrées 41 à 48 du circuit IC sont au potentiel 0 V, donc les sorties 51 à 54 sont au potentiel -12 V. Le condensateur C3 se charge alors, par l'intermédiaire de la diode D2, de sorte que l'émetteur du transistor T2 est au potentiel 0 V, tout comme sa base : le transistor T2 n'est donc pas passant.

2.- lorsqu'une tension nulle ou positive est appliquée à l'entrée 50, les entrées 41 à 48 du circuit IC sont au potentiel -12 V du fait du transistor T3, donc les sorties 51 à 54 dudit circuit IC sont au potentiel 0 V. Du fait de la charge accumulée par le condensateur C3, l'émetteur du transistor T2 est donc porté à un potentiel de +12 V, tandis que sa base est reliée à la terre par la résistance R4 : le transistor T2 devient donc passant, de sorte que le point 57 et la borne 3 sont portés à +12 V.

Ainsi, le circuit HT permet d'envoyer vers l'ordinateur des signaux +12 / - 12 V à partir de signaux 0 / -5 V reçus du microcontrôleur, ou de signaux +U / U reçus du périphérique à travers la résistance RS, où U est une tension inférieure à 12 V.

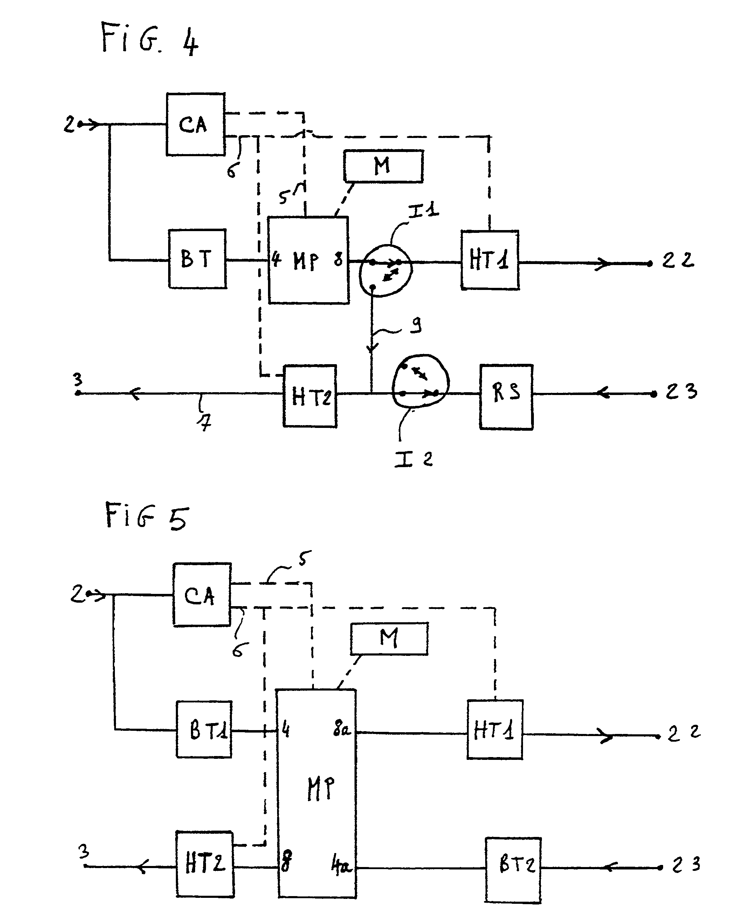

La figure 4 représente une variante de clé transparente selon l'invention qui comporte non plus un, mais deux circuits élévateurs de tension HT1 et HT2. Les circuits HT1 et HT2 sont alimentés en tension par le circuit CA, par exemple en -12 V ou à la fois en -12 V et en +12 V, et le microcontrôleur MP est alimenté en tension réduite (par exemple -5 V) par le même circuit CA, qui puise son énergie dans les signaux de données reçus sur la borne 2. En outre, la clé de la figure 4 comporte deux commutateurs électroniques I1 et I2 commandés par le microcontrôleur MP. De plus, la borne d'entrée 2 de la clé n'est plus connectée directement à la borne 22, de sorte que tous les signaux reçus du calculateur sur la borne 2 arrivent au microcontrôleur MP.

Ainsi, la borne 2 est connectée d'une part au circuit CA, et d'autre part à l'entrée 4 du microcontrôleur MP, par l'intermédiaire de la résistance RS. Le circuit CA alimente d'une part le microcontrôleur MP, à une tension de -5V par exemple, et les circuits HT1 et HT2. Le commutateur I1 peut connecter la sortie 8 du microcontrôleur soit au circuit HT1, qui transmet alors au périphérique P les signaux émis par le microcontrôleur MP en élevant leur tension, soit à la ligne 9 qui relie la sortie 8 du microcontrôleur MP au circuit HT2, qui transmet alors au calculateur les signaux émis par le microcontrôleur MP en élevant leur tension. Le commutateur I2 peut soit connecter la ligne 9 à la borne 23 par l'intermédiaire de la résistance RS, soit isoler la ligne 9 de la borne 23. Les commutateurs I1 et I2 sont normalement dans un état où ils connectent respectivement la sortie 8 du microcontrôleur MP avec le circuit HT1, et la borne 23 avec la ligne 9.

Si le signal reçu du calculateur ne comporte pas de balise de reconnaissance, il est réémis en 8 vers le périphérique par l'intermédiaire du circuit HT1, et les signaux en retour provenant du périphérique P transitent par la résistance RS et le circuit HT2. Si le signal comporte la balise de reconnaissance indiquant qu'il est destiné au microcontrôleur MP, le microcontrôleur MP envoie par sa sortie 8 et le circuit HT1, un signal destiné au périphérique, demandant audit périphérique de ne plus émettre, puis le commutateur I1 bascule dans un état où il connecte la sortie 8 du microcontrôleur MP à la ligne 9, puis le commutateur I2 est basculé dans un état où il coupe la connexion entre la résistance RS et le circuit HT2, puis le microcontrôleur MP envoie sa réponse au calculateur par la ligne 9 et le circuit HT2, puis les deux commutateurs I1 et I2 sont ramenés à leur état initial, tel que représenté sur la figure 4, où ils connectent respectivement la sortie 8 sur le circuit HT1 et la borne 23 avec la ligne 9, puis enfin le microcontrôleur MP envoie un message au périphérique qui autorise ledit périphérique à émettre à nouveau des signaux vers la borne 23. Le commutateur I2 peut éventuellement être omis, sans sortir du cadre de la présente invention : dans ce cas la borne 23 est en permanence connectée à la ligne 9 par l'intermédiaire de la résistance RS.

La figure 5 représente encore une autre variante de clé transparente selon l'invention dans laquelle le microcontrôleur MP possède une entrée 4 reliée à la borne 2 par un circuit abaisseur de tension BT1, une sortie 8a reliée à la borne 22 par l'intermédiaire d'un circuit élévateur de tension HT1, une entrée 4a reliée à la borne 23 par l'intermédiaire d'un circuit abaisseur de tension BT2, et une sortie 8a reliée à la borne 3 par un circuit élévateur de tension HT2.

Dans cette variante, tous les signaux transitent par le microcontrôleur MP. Tous les signaux reçus en 4a sont réémis en 8 ; les signaux reçus en 4 sont réémis en 8a s'ils ne comportent pas la balise de reconnaissance, ou bien ils sont traités par le microcontrôleur s'ils possèdent la balise de reconnaissance, puis la réponse est émise en 8.

## Revendications

1.- Dispositif matériel identifiable par un logiciel utilisant des moyens, standard ou non, de communication sur un calculateur, organisé pour être branché sur une sortie (2) dudit calculateur pour recevoir des signaux d'interrogation et renvoyer audit calculateur des signaux de réponse, dont l'examen par le calculateur permet de contrôler la présence dudit dispositif, caractérisé en ce que ledit dispositif comporte un microcontrôleur (MP) à faible consommation, et est alimenté en énergie électrique uniquement par les signaux reçus du calculateur, et en ce qu'il comporte un circuit abaisseur de tension (BT, BT1) pour adapter les signaux reçus du calculateur à la tension du microcontrôleur, un circuit élévateur de tension (HT, HT2) pour adapter les signaux de réponse émis par le microcontrôleur à la tension du calculateur, et un circuit d'alimentation (CA) recevant les signaux d'interrogation émis par le calculateur, pour accumuler sous forme utilisable l'énergie reçue du calculateur dans les signaux d'interrogation, avec une alimentation à la tension du microcontrôleur, et une alimentation pour le circuit élévateur (HT, HT2).

2.- Dispositif selon la revendication 1, agencé en transparence entre ledit calculateur et un périphérique (P), caractérisé en outre en ce qu'une ligne (23) en retour du périphérique est connectée à la borne de sortie (8) du microcontrôleur, par l'intermédiaire d'une résistance (RS), de façon que, quand le microcontrôleur émet un signal de réponse, un signal provenant du périphérique ne perturbe pas la sortie (8) du microcontrôleur (MP).

3.- Dispositif selon la revendication 2, caractérisé en outre en ce que la ligne (23) en retour du périphérique est connectée à une entrée (10) du microcontrôleur, par l'intermédiaire d'une résistance (RE) pour faire chuter la tension à celle du microcontrôleur pour y faire entrer l'information d'un signal avertissant d'une émission.

4.- Dispositif selon la revendication 3, caractérisé en outre en ce que le microcontrôleur (MP) envoie un message au calculateur si un signal provenant du périphérique (P) a été détecté par l'entrée (10) pendant qu'un message était émis vers le calculateur par la borne de sortie (8) du microcontrôleur (MP).

5.- Dispositif selon la revendication 1, agencé en transparence entre ledit calculateur et un périphérique (P), caractérisé en outre en ce que tous les signaux de données émis par le calculateur transitent par le microcontrôleur (MP), et ledit dispositif comporte :
   – un moyen (I2) pour orienter sélectivement les signaux émis par le microcontrôleur (MP) soit vers le calculateur soit vers le périphérique (P), et
   – un second circuit élévateur de tension (HT1) alimenté par le circuit d'alimentation (CA), pour adapter à la tension du périphérique (P) les signaux émis par ledit microcontrôleur (MP) vers le périphérique (P).

6.- Dispositif selon la revendication 1, agencé en transparence entre ledit calculateur et un périphérique (P), caractérisé en outre en ce que tous les signaux de données émis par le calculateur transitent par le microcontrôleur (MP), le microcontrôleur (MP) reçoit les signaux en retour du périphérique (P), par l'intermédiaire d'un second circuit abaisseur de tension (BT2), et ledit dispositif comporte un second circuit élévateur de tension (HT1) alimenté par le circuit d'alimentation (CA), pour adapter à la tension du périphérique (P) les signaux émis par ledit microcontrôleur (MP) vers le périphérique (P).

7.- Dispositif selon la revendication 1, caractérisé en outre en ce qu'il comporte une mémoire rémanente (M).

8.- Dispositif selon la revendication 1, caractérisé en outre en ce que le microcontrôleur (MP), comporte des moyens pour stocker une première série de caractères, des moyens pour comparer, suivant des critères déterminés, à ladite première série une seconde série de caractères en moindre nombre, contenue dans un signal d'interrogation, et des moyens pour émettre un signal de réponse en fonction du résultat de ladite comparaison, ledit signal de réponse étant constitué par une troisième série de caractères, et de façon qu'une seconde série donnée de caractères reçoive toujours la même réponse.

9.- Dispositif selon la revendication 8, caractérisé en outre en ce que les moyens pour comparer la deuxième série de caractères à la première série de caractères sont organisés pour rechercher, dans la deuxième série, la première séquence commune la plus longue, et pour repérer la position de ladite première séquence la plus longue dans ladite seconde série, les éléments caractéristiques du signal de réponse étant ladite première séquence la plus longue et ladite position de cette séquence.

10.- Dispositif selon la revendication 9, caractérisé en outre en ce qu'il comporte des moyens pour coder les éléments caractéristiques dudit signal de réponse.

11.- Dispositif selon la revendication 10, caractérisé en outre en ce que les. moyens pour coder comportent une table de correspondance attribuant à une position déterminée de ladite première séquence dans la seconde série, une autre position dans la série, définie par la table de correspondance.

12.- Dispositif selon la revendication 1, caractérisé en outre en ce que lesdits signaux d'interrogation et lesdits signaux de réponse sont codés en fonction d'une loi de codage choisie.

13.- Dispositif selon la revendication 12, caractérisé en outre en ce que ladite loi de codage choisie est une table de correspondance contenue dans le programme et dans la mémoire interne de la clé.

14.- Dispositif selon la revendication 13, caractérisé en outre en ce que ladite table de correspondance est modifiée au cours des échanges de signaux d'interrogation et de réponse entre le calculateur et la clé, par une permutation circulaire déterminée par une valeur entière aléatoire transmise dans un signal d'interrogation ou de réponse précédemment échangé entre le calculateur et la clé.

Fig 1

Fig. 2

FIG. 3

FiG. 4

FiG 5

Office européen
des brevets

**RAPPORT DE RECHERCHE EUROPEENNE**

Numéro de la demande

EP 91 40 0196

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 314 530 (MICROPHAR)<br>* Revendications 1-2,5,6; colonne 9, lignes 12-18; figure 4 *<br>--- | 1-2,7 | G 06 F 1/00 |
| A | FR-A-2 622 319 (GUERRI)<br>* Page 4, lignes 8-32; figure 1 *<br>--- | 1,7 | |
| A | FR-A-2 577 332 (LEVEQUE)<br>* Revendications 1-3; figure 1 *<br>--- | 1,7,8,<br>10,11 | |
| A | EP-A-0 183 608 (SCHLUMBERGER TECH.)<br>* Page 6, ligne 1 - page 8, ligne 2; page 8, lignes 25-29; page 9, lignes 17-34; figure 2 *<br>--- | 1-2 | |
| A | EP-A-0 084 441 (TABS LTD)<br>* Page 4, ligne 19 - page 8, ligne 1; page 8, ligne 22 - page 9, ligne 6; figure 1 *<br>----- | 1,8 | |
| | | | **DOMAINES TECHNIQUES RECHERCHES (Int. Cl.5)**<br><br>G 06 F 1/00<br>G 06 F 1/26 |

Le présent rapport a été établi pour toutes les revendications

| Lieu de la recherche | Date d'achèvement de la recherche | Examinateur |
|---|---|---|
| LA HAYE | 07-05-1991 | MOENS R.A.A. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

     & : membre de la même famille, document correspondant

EPO FORM 1503 03.82 (P0402)